# EUROPEAN PATENT SPECIFICATION

(11) **EP 2 459 429 B1**
(45) Date of publication and mention of the grant of the patent: **03.09.2014**
(21) Application number: 10739982.6
(22) Date of filing: 23.07.2010
(51) Int. Cl.: B61G 11/16, B60R 19/34, F16F 7/12

(54) **SELF-CORRECTING CRASH ENERGY ABSORBER**
SELBSTKORRIGIERENDER AUFPRALLENERGIEABSORBER
ABSORBEUR D'ÉNERGIE DE COLLISION AUTO-CORRECTEUR

(30) Priority: 29.07.2009 GB 0913174
(43) Date of publication of application: 06.06.2012
(73) Proprietor: University of Newcastle-Upon Tyne, Newcastle-upon-Tyne Tyne and Wear NE1 7RU (GB)
(72) Inventor: O'NEILL, Conor Francis, Tyne&Wear NE3 3DB (GB); ROBINSON, Alexander Mark, Northumberland NE65 8QY (GB)
(74) Representative: Vinsome, Rex Martin
(86) International application number: PCT/GB2010/051222
(87) International publication number: WO 2011/012884

(56) References cited:
- DE-A1-102007 005 421
- DE-U1- 9 311 041
- US-A- 3 857 595

## Description

The present invention relates to energy absorption apparatus, and relates particularly, but not exclusively, to energy absorption apparatus for mounting to rail vehicles to absorb kinetic energy in the event of a collision.

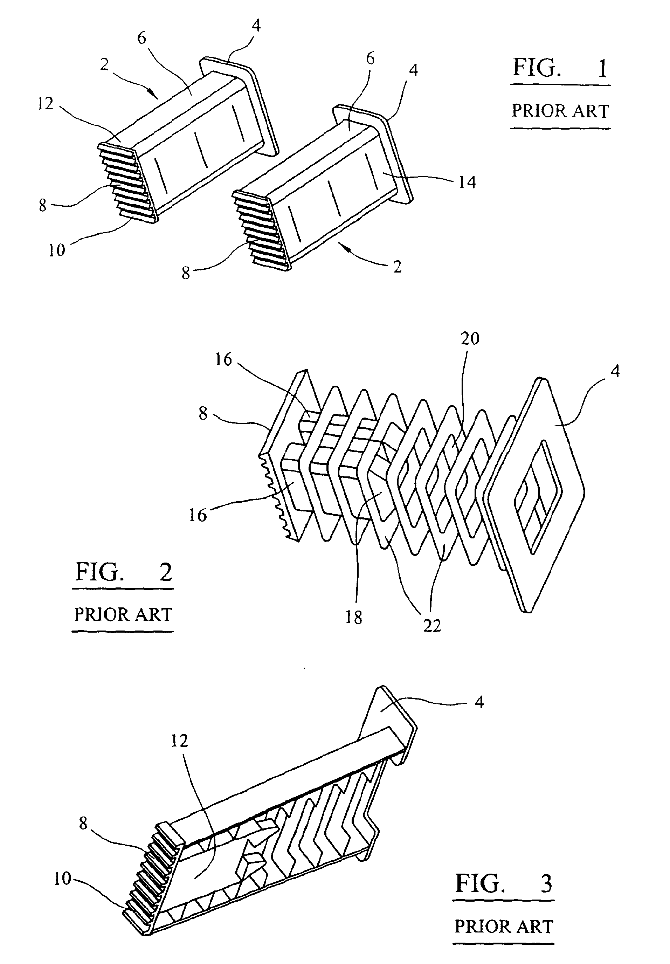

Rail vehicles are provided with energy absorbers to absorb the kinetic energy of the vehicle in the event of a collision, in order to minimise the risk of injury to passengers travelling in the vehicle and to manage damage to the rail vehicle as the moving vehicle is brought to rest. An example of an existing energy absorber is shown in Figures 1 to 3. Typically, such energy absorbers would be mounted to each end of a rail vehicle. Each energy absorber 2 comprises a back plate 4 mounted to a body of a rail vehicle (not shown) to which a generally tapered steel housing 6 is mounted. An anti-climber plate 8 in the form of a steel plate provided with ridges 10 is mounted on the end of the housing 6 remote from the back plate 4. The housing 6 is provided with an indentation 12 adjacent the anti-climber plate 8 and a series of weakened regions 14 extending around and spaced apart along the housing 6.

The weakened regions 14 are arranged such that in the event of an impact on the anti-climber plate 8 as a result of a collision, the region of the housing 6 having the indentation 12 adjacent to anti-climber plate 8 is designed to be the weakest part of the energy absorber 2 and to deform and thereby absorb energy first, followed by the adjacent region of the housing 6 and so on, the region adjacent to back plate 4 being designed to deform last. As a result, kinetic energy of the moving vehicle is absorbed in the event of an impact by progressive folding of sections of the steel housing 6 of the energy absorbers 2 mounted to the vehicle, and of similar energy absorbers 2 mounted to a further vehicle with which the vehicle collides.

In order to minimise the tendency of an impact offset from the central region of the anti-climber plate 8 to cause rotational motion of the anti-climber plate 8 relative to the housing 6, which may otherwise prevent deformation of the housing 6 and therefore cause the energy absorber 2 to fail to absorb kinetic energy to a sufficient extent, a pair of guides 16 is mounted to the rear face of the anti-climber plate 8 such that crushing of the housing 6 causes tapered regions 18 on the distal ends of the guides 16 to pass through corresponding apertures 20 in a series of spaced apart plates 22 mounted to the inside of the housing 6. This therefore tends to maintain the orientation of the anti-climber plate 8 generally parallel to that of the back plate 4.

The arrangement of Figures 1 to 3 suffers from the drawback that it has a complex construction with associated high design, materials and manufacturing cost. A further drawback is that it also has a large mass (typically 275kg), causing relatively high fuel and/or energy consumption and associated carbon emissions. In addition, if the energy absorbers 2 are not accurately aligned with the body of the vehicle to which they are mounted, rotation of the anti-climber plate 8 relative to the back plate 4 may occur during a collision, as a result of which progressive folding of the housing 6, and therefore absorption of kinetic energy, may not occur in a desirable, efficient or effective manner.

DE 102007005421 discloses an energy absorption apparatus according to the preamble of claim 1.

Preferred embodiments of the present invention seek to overcome one or more of the above disadvantages of the known energy absorber.

According to the present invention there is provided an energy absorption apparatus for absorbing kinetic energy of a vehicle, the apparatus comprising:-
a support adapted to be mounted to a vehicle body; and
energy absorption means mounted to the support and comprising a plurality of energy absorption portions, each of which has at least one respective deformable material adapted to absorb energy by being deformed and having a respective deformation resistance, wherein the energy absorption portions are arranged substantially in order of sequentially increasing deformation resistance, and the apparatus is adapted to be mounted to the vehicle body such that the energy absorption portions are arranged substantially in order of increasing deformation resistance in a direction moving away from the vehicle body, characterised in that at least one said energy absorption portion comprises a plurality of hollow crushable components.

By arranging the energy absorption portions in order of increasing deformation resistance in a direction moving away from the vehicle body, this provides the advantage of initiating deformation of the energy absorption apparatus at a location being substantially the furthest part of the energy absorption apparatus from the point of impact. As a result, any rotational component of deformation force will crush the deformable material more on one side than on another side thereof, as a result of which the uncrushed part of the material becomes relatively less stiff than the crushed part. This in turn causes a tendency for the uncrushed part of the material to become more easily crushed than the crushed part, which in turn initiates a rotational component of deformation force opposite to the original rotational component. As a result of this self correcting feature, the present invention is significantly more reliable than the existing design, but is of significantly simpler construction, which enables it to be made at significantly lower weight and cost. This in turn results in reduced fuel consumption of the vehicle to which the energy absorption apparatus is mounted.

A plurality of said crushable components may comprise crushable tubes.

The crushable components of at least one said energy absorption portion may be arranged in at least one respective array.

This provides the advantage of constraining the tubes against significant movement in a direction transverse to their longitudinal axes, which in turn increases the deformation resistance, and therefore the energy absorbing capacity, of the deformable material.

The crushable components of at least one said energy absorption portion may be arranged in at least one honeycomb structure.

At least one said deformable material may comprise at least one metal.

At least one said deformable material may comprise at least one foam material.

At least one said deformable material may comprise at least one polymer.

At least one said deformable material may comprise at least one composite material.

At least one said deformable material may comprise at least one hybrid material.

The support may comprise at least one back plate having greater crush resistance than each said deformable material.

This provides the advantage of providing a stiff back plate against which the crushed energy absorbing material comes to rest, thereby ensuring that the crushing process continues through the deformable materials of progressively increasing deformation resistance.

The apparatus may further comprise barrier means arranged between at least one pair of adjacent said energy absorption portions.

This provides the advantage of preventing mixing or interpenetration of the energy absorbing portions.

The apparatus may further comprise slide resisting means for resisting sliding movement of the vehicle in a direction transverse to the direction of travel of the vehicle.

The slide resisting means may comprise at least one plate provided with ridges.

The support may further comprise a housing accommodating said energy absorption means.

This provides the advantage of minimising the extent of flying debris in the event of a collision and protecting the energy absorption portions from ballast and other penetrating impacts.

The housing may be provided with collapse initiation and management means.

The collapse initiation and management means may comprise at least one weakened region.

This provides the advantage of enabling collapsing of the housing during a collision to be controlled.

A preferred embodiment of the invention will now be described, by way of example only and not in any limitative sense, with reference to the accompanying drawings in which:-
Figure 1 is a perspective view of a pair of known energy absorbers;
Figure 2 is a perspective view of one of the energy absorbers of Figure 1 with a housing thereof removed;
Figure 3 is a partly cut away view of one of the energy absorber of Figure 1;
Figure 4 is a perspective view of an energy absorber embodying the present invention;
Figure 5 is a partly cut away view of the energy absorber of Figure 4;
Figure 6 is a schematic illustration of a pair of energy absorbers as shown in Figure 4 during a collision; and
Figures 7 to 10 are a schematic illustration of the energy absorbing behaviour of one of the energy absorbing blocks of the energy absorber of Figure 4.

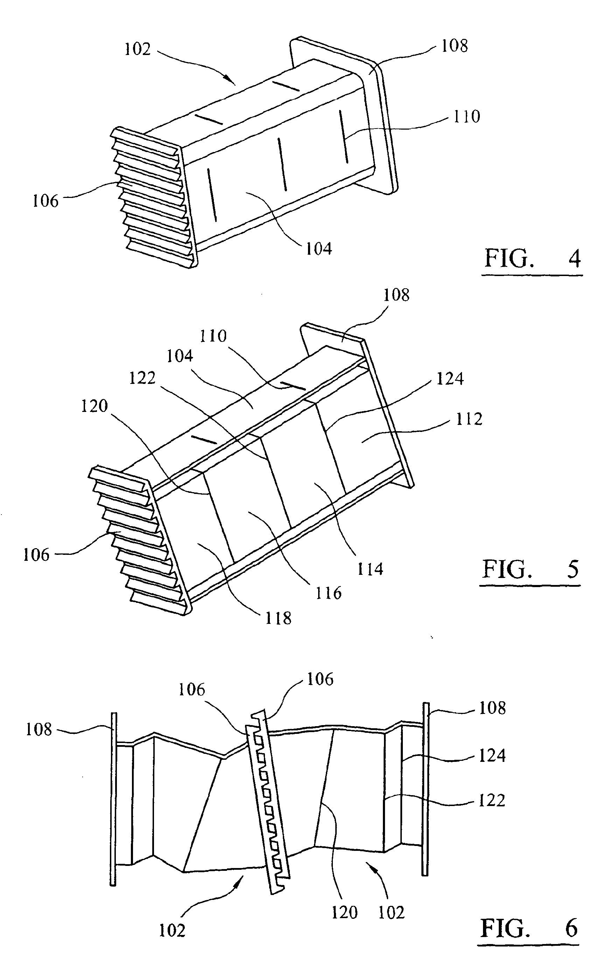

Referring to Figures 4 and 5, an energy absorber 102 embodying the present invention and for mounting to a rail vehicle (not shown) has a support in the form of an aluminium housing 104 having a steel anti-climber plate 106 mounted to one end of the housing 104, and an aluminium back plate 108 mounted to the other end of the housing 104. The back plate 108 is arranged to be mounted to a body of the rail vehicle. The housing 104 is provided with a series of weakened regions 110 spaced apart along the housing 104, to enable the housing to collapse and progressively fold in the event of a sufficiently large impact on the anti-climber plate 106.

A series of energy absorber blocks 112, 114, 116, 118 are arranged inside the housing 104, and are each formed from a crushable material such as aluminium honeycomb material or crushable foam material. The energy absorber blocks 112, 114, 116, 118 have different crush resistances, and are arranged in order of increasing crush resistance in a direction from the back plate 108 to the anti-climber plate 106, so that the block 112 of weakest material is in contact with the back plate 108, and the block 118 of strongest material is in contact with the anti-climber plate 106. Aluminium support plates 120, 122, 124 are positioned between the respective pairs of energy absorption blocks 116 and 118, 114 and 116, and 112 and 114 to prevent the energy absorbing blocks interpenetrating one another. The energy absorber 102 shown in Figures 4 and 5 typically has a mass of 108kg, compared with a mass of 275kg of the energy absorber shown in Figures 1 to 3, resulting in significant reduction in fuel consumption by the vehicle to which the energy absorber 102 is mounted.

By way of example only the operation of the energy absorber 102 of Figures 4 and 5 will now be described with reference to Figures 6 to 10.

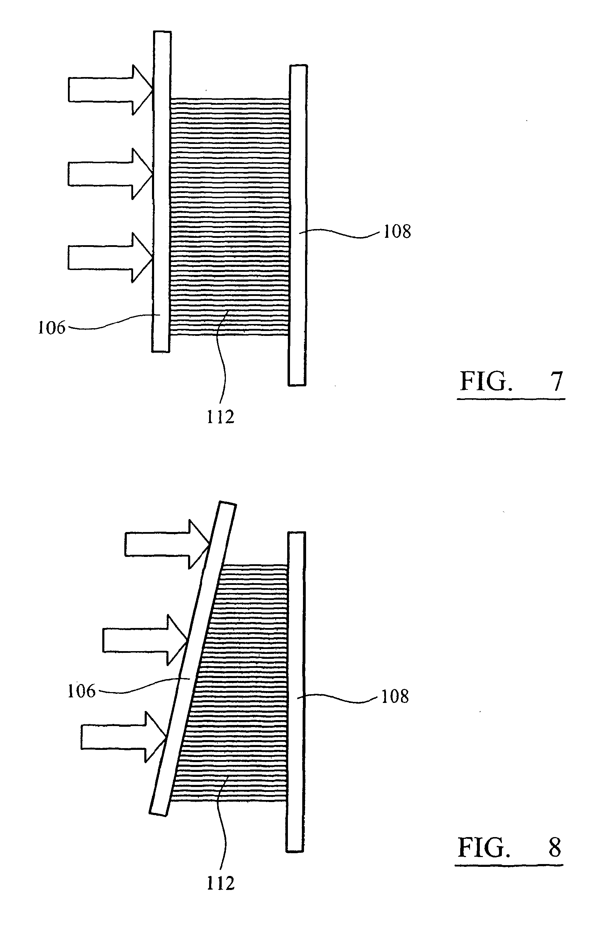

In the event of a collision between two rail vehicles provided with identical energy absorbers 102 of the type shown in Figures 4 and 5, the anti-climber plates 106 of the energy absorbers 102 initially engage each other such that ridges on the anti-climber plates 106 resist sliding motion of one of the vehicles relative to the other to minimise the risk of one vehicle climbing onto the other vehicle. Since the energy absorber block 112 of smallest crush resistance of each energy absorber 102 is arranged adjacent the respective back plate 108, crushing, and therefore energy absorption, occurs initially in the block 112 adjacent the back plates 108, as shown in Figure 7, in which the other energy absorber blocks 114, 116, 118 are not shown. When complete crushing of the energy absorber block 112 has occurred, crushing of the remaining blocks 114, 116, 118 occurs in order of increasing crush resistance, i.e. progressively in a direction from the back plate 108 towards the anti-climber plate 106.

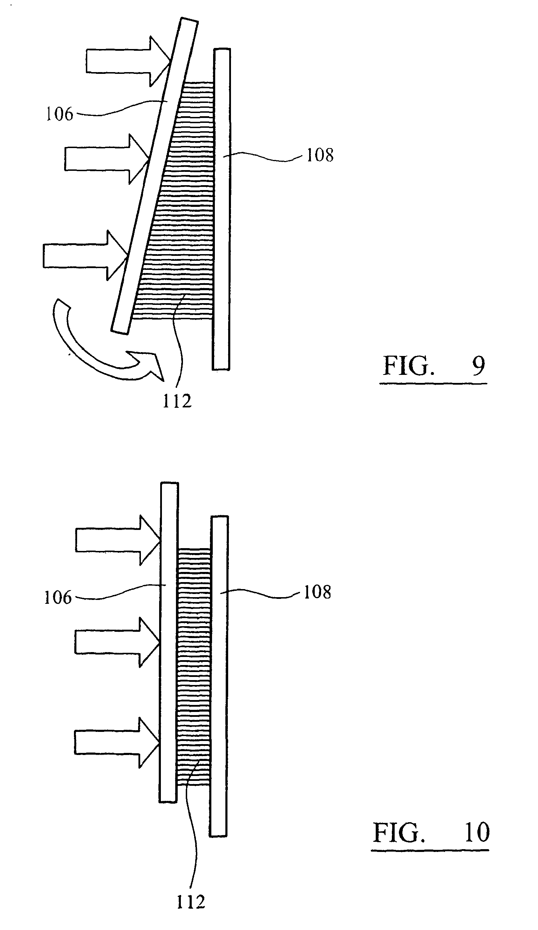

If, as a result of the two rail vehicles being slightly offset in position relative to each other causing an offset in height between the anti-climber plates 106, the impact force is applied unevenly to the energy absorbers 102, a tendency to produce rotational movement of the anti-climber plates 106 relative to the back plates 108 arises, as shown in Figure 8. If this rotational movement is clockwise, as shown in Figure 8, the upper part of the block 112 of crushable material will be crushed more than the lower part of the block 112, as a result of which complete crushing of the upper part will occur before the lower part has been completely crushed. Because the upper part of the block 112 becomes more resistant to deformation as a result of crushing, and therefore less prone to crushing than the lower part, further crushing of the block 112 tends to cause an anticlockwise component of rotational motion of the anti-climber plate 106 relative to the back plate 108, as shown in Figure 9, and further crushing of the energy absorber block 112 tends to correct any rotational component of movement of the anti-climber plates 106 relative to the back plates 108 as shown in Figure 10.

It will be appreciated that a similar but opposite crushing process will occur in the other energy absorber 102 and shown in Figure 6, the crushing process extending sequentially to the remaining energy absorber blocks 114, 116, 118 as complete crushing of the weakest block 112 occurs. It can therefore be seen that the energy absorbers 102 of the present invention have a tendency to correct any rotational component of motion of the anti-climber plates 106 and the energy absorber 102 relative to the back plates 108 which may arise during crushing of the energy absorber blocks 112, 114, 116, 118, which maximises the extent of energy absorption and increases the reliability of operation of the energy absorber 102.

It will be appreciated by persons skilled in the art that the above embodiment has been described by way of example only, and not in any limitative sense. For example, the energy absorber 102 may be mounted directly to a vehicle body without the use of a back plate 108, in which case the vehicle body provides a hard reaction surface for the weakest energy absorber block 112. Also, although the above embodiment describes energy absorbing material in the form of crushable tubes, it will be appreciated by persons skilled in the art that the crushable components can have any geometry. For further example the energy absorber 102 when fitted to any rail vehicle will provide said rail vehicle with an efficient and effective energy absorption device in the event that said rail vehicle is involved in a collision with another rail vehicle which does not incorporate an energy absorption device of the present invention and which includes energy absorption devices as described by the prior art or no energy absorption device at all. Similarly, the energy absorber 102 when fitted to any rail vehicle will provide said rail vehicle with an efficient and effective energy absorption device in the event that said rail vehicle is involved in a collision with any inanimate object, such as a wall.

## Claims

1. An energy absorption apparatus (102) for absorbing kinetic energy of a vehicle, the apparatus comprising:-
a support (108) adapted to be mounted to a vehicle body; and
energy absorption means (112, 114, 116, 118) mounted to the support (108) and comprising a plurality of energy absorption portions, each of which has at least one respective deformable material adapted to absorb energy by being deformed and having a respective deformation resistance, wherein the energy absorption portions are arranged substantially in order of sequentially increasing deformation resistance, and the apparatus (102) is adapted to be mounted to the vehicle body such that the energy absorption portions are arranged substantially in order of increasing deformation resistance in a direction moving away from the vehicle body, **characterised in that** at least one of said energy absorption portion comprises a plurality of hollow crushable components.

2. An apparatus according to claim 1, wherein a plurality of said crushable components comprise crushable tubes.

3. An apparatus according to claim 1 or 2, wherein the crushable components of at least one said energy absorption portion are arranged in at least one respective array.

4. An apparatus according to claim 3, wherein the crushable components of at least one said energy absorption portion are arranged in at least one honeycomb structure.

5. An apparatus according to any one of the preceding claims, wherein at least one said deformable material comprises at least one metal.

6. An apparatus according to any one of the preceding claims, wherein at least one said deformable material comprises at least one foam material.

7. An apparatus according to any one of the preceding claims, wherein at least one said deformable material comprises at least one polymer.

8. An apparatus according to any one of the preceding claims, wherein at least one said deformable material comprises at least one composite material.

9. An apparatus according to any one of the preceding claims, wherein at least one said deformable material comprises at least one hybrid material.

10. An apparatus according to any one of the preceding claims, wherein the support comprises at least one back plate (108) having greater crush resistance than each said deformable material.

11. An apparatus according to any one of the preceding claims, including one or more of the following features:
(i) further comprising barrier means (120, 122, 124) arranged between at least one pair of adjacent said energy absorption portions;
(ii) further comprising slide resisting means (106) for resisting sliding movement of the vehicle in a direction transverse to the direction of travel of the vehicle; or
(iii) wherein the support further comprises a housing (104) accommodating said energy absorption means (112, 114, 116, 118).

12. An apparatus according to claim 11, wherein said slide resisting means (106) comprises at least one plate provided with ridges.

13. An apparatus according to claim 11, wherein the housing (104) is provided with collapse initiation and management means (110).

14. An apparatus according to claim 13, wherein the collapse initiation and management means (110) comprises at least one weakened region.

## Patentansprüche

1. Energieabsorptionsvorrichtung (102) zum Absorbieren von kinetischer Energie eines Fahrzeugs, wobei die Vorrichtung Folgendes umfasst:
einen Träger (108) zur Montage an einer Fahrzeugkarosserie; und
Energieabsorptionsmittel (112, 114, 116, 118), die an dem Träger (108) montiert sind und mehrere Energieabsorptionsabschnitte jeweils mit wenigstens einem jeweiligen verformbaren Material aufweisen, das zum Absorbieren von Energie durch Verformung ausgelegt ist und einen jeweiligen Verformungswiderstand hat, wobei die Energieabsorptionsabschnitte im Wesentlichen so ausgelegt sind, dass der Verformungswiderstand sequentiell zunimmt, und die Vorrichtung (102) zur Montage an der Fahrzeugkarosserie so ausgelegt ist, dass die Energieabsorptionsabschnitte im Wesentlichen nach zunehmendem Verformungswiderstand in einer Richtung von der Fahrzeugkarosserie weg angeordnet sind, **dadurch gekennzeichnet, dass** wenigstens einer der genannten Energieabsorptionsabschnitte mehrere hohle knautschfähige Komponenten umfasst.

2. Vorrichtung nach Anspruch 1, wobei mehrere der genannten knautschfähigen Komponenten knautschfähige Röhren umfassen.

3. Vorrichtung nach Anspruch 1 oder 2, wobei die knautschfähigen Komponenten von wenigstens einem genannten Energieabsorptionsabschnitt in wenigstens einem jeweiligen Array angeordnet sind.

4. Vorrichtung nach Anspruch 3, wobei die knautschfähigen Komponenten von wenigstens einem genannten Energieabsorptionsabschnitt in wenigstens einer Wabenstruktur angeordnet sind.

5. Vorrichtung nach einem der vorherigen Ansprüche, wobei wenigstens ein genanntes verformbares Material wenigstens ein Metall umfasst.

6. Vorrichtung nach einem der vorherigen Ansprüche, wobei wenigstens ein genanntes verformbares Material wenigstens ein Schaumstoffmaterial umfasst.

7. Vorrichtung nach einem der vorherigen Ansprüche, wobei wenigstens ein genanntes verformbares Material wenigstens ein Polymer umfasst.

8. Vorrichtung nach einem der vorherigen Ansprüche, wobei wenigstens ein genanntes verformbares Material wenigstens ein Verbundstoffmaterial umfasst.

9. Vorrichtung nach einem der vorherigen Ansprüche, wobei wenigstens ein genanntes verformbares Material wenigstens ein Hybridmaterial umfasst.

10. Vorrichtung nach einem der vorherigen Ansprüche, wobei der Träger wenigstens eine Rückplatte (108) mit einem größeren Knautschwiderstand umfasst als jedes genannte verformbare Material.

11. Vorrichtung nach einem der vorherigen Ansprüche, die eines oder mehrere der folgenden Merkmale beinhaltet:
(i) sie umfasst ferner Barrieremittel (120, 122, 124), die zwischen wenigstens einem Paar benachbarten genannten Energieabsorptionsabschnitten angeordnet sind;
(ii) sie umfasst ferner Gleitwiderstandsmittel (106) zum Widerstehen einer Gleitbewegung des Fahrzeugs in einer Richtung quer zur Fahrtrichtung des Fahrzeugs; oder
(iii) der Träger umfasst ferner ein Gehäuse (104), das die genannten Energieabsorptionsmittel (112, 114, 116, 118) aufnimmt.

12. Vorrichtung nach Anspruch 11, wobei die genannten Gleitwiderstandsmittel (106) wenigstens eine mit Rippen versehene Platte umfassen.

13. Vorrichtung nach Anspruch 11, wobei das Gehäuse (104) mit Zusammenfalteinleitungs- und -managementmitteln (110) versehen ist.

14. Vorrichtung nach Anspruch 13, wobei das Zusammenfalteinleitungs - und -managementmittel (110) wenigstens eine geschwächte Region umfasst.

## Revendications

1. Dispositif d'absorption d'énergie (102) destiné à absorber l'énergie cinétique d'un véhicule, le dispositif comprenant :
un support (108) conçu pour être monté sur une carrosserie de véhicule ; et
un moyen d'absorption d'énergie (112, 114, 116, 118) monté sur le support (108), et comprenant plusieurs parties d'absorption d'énergie, dont chacune possède au moins un matériau déformable respectif, conçu pour absorber de l'énergie en étant déformé et par ses propriétés de résistance à la déformation respective, dans lequel les parties d'absorption d'énergie sont disposées sensiblement par ordre séquentiel de résistance croissante à la déformation, et le dispositif (102) est conçu pour être monté sur la carrosserie de véhicule de telle sorte que les parties d'absorption d'énergie soient disposées sensiblement par ordre de résistance croissante à la déformation dans une direction s'éloignant de la carrosserie du véhicule, **caractérisé en ce qu'**au moins l'une desdites parties d'absorption d'énergie comporte plusieurs composants creux écrasables.

2. Dispositif selon la revendication 1, dans lequel plusieurs desdits composants écrasables sont constitués de tubes écrasables.

3. Dispositif selon la revendication 1 ou 2, dans lequel les composants écrasables d'au moins l'une desdites parties d'absorption d'énergie sont disposés dans au moins une batterie respective.

4. Dispositif selon la revendication 3, dans lequel les composants écrasables d'au moins l'une desdites parties d'absorption d'énergie sont disposées dans au moins une structure alvéolaire.

5. Dispositif selon l'une quelconque des revendications précédentes, dans lequel au moins l'un desdits matériaux déformables comporte au moins un métal.

6. Dispositif selon l'une quelconque des revendications précédentes, dans lequel au moins l'un desdits matériaux déformables comporte au moins un matériau constitué de mousse.

7. Dispositif selon l'une quelconque des revendications précédentes, dans lequel au moins l'un desdits matériaux déformables comporte au moins un polymère.

8. Dispositif selon l'une quelconque des revendications précédentes, dans lequel au moins l'un desdits matériaux déformables comporte au moins un matériau composite.

9. Dispositif selon l'une quelconque des revendications précédentes, dans lequel au moins l'un desdits matériaux déformables comporte au moins un matériau hybride.

10. Dispositif selon l'une quelconque des revendications précédentes, dans lequel le support comporte au moins une plaque d'appui (108) possédant une résistance à l'écrasement supérieure à celle de chacun desdits matériaux déformables.

11. Dispositif selon l'une quelconque des revendications précédentes, comportant une ou plusieurs des caractéristiques consistant en ce que :
(i) il comporte en outre un moyen formant barrière (120, 122, 124) disposé entre au moins une paire desdites parties d'absorption d'énergie adjacentes,
(ii) il comporte en outre un moyen de résistance au glissement (106) résistant au mouvement de glissement du véhicule dans une direction transversale à la direction de déplacement du véhicule ; ou
(iii) le support comporte en outre un carter (104) abritant ledit moyen d'absorption d'énergie (112, 114, 116, 118).

12. Dispositif selon la revendication 11, dans lequel ledit moyen de résistance au glissement (106) comporte au moins une plaque munie de stries.

13. Dispositif selon la revendication 11, dans lequel le carter (104) est muni d'un moyen de déclenchement et de gestion du pliage (110).

14. Dispositif selon la revendication 13, dans lequel le moyen de déclenchement et de gestion du pliage (110) comporte au moins une région affaiblie.
